# EUROPEAN PATENT APPLICATION

(11) **EP 1 346 956 A1**
(43) Date of publication of application: **24.09.2003**
(21) Application number: 03251563.7
(22) Date of filing: 14.03.2003
(51) Int. Cl.: C02F 3/12, C02F 11/00

(54) **Process for sludge treatment using sludge pretreatment and membrane bioreactor**

(30) Priority: 15.03.2002 KR 2002013992
(71) Applicant: Genix Engineering, Inc., Soyang-Si, Gyeonggi-do, 412-210 (KR); Tae Young Corporation, Goyang-si, Gyeonggi-do 412-210 (KR)
(72) Inventor: Yum, Ick-Tae, Seongbuk-gu, Seoul, 136-130 (KR); Kwon, Jae-Hyun, Busanjin-gu, Busan 614-012 (KR); Kim, Hyung-Soo, Gyeonggi-do, 435-040 (KR); Kim, Hoon, Yongin-si, Gyeonggi-do 449-843 (KR)
(74) Representative: Knott, Stephen Gilbert

(57) **Abstract**

Disclosed are methods for providing an improved process for organic sludge treatment. In the present invention, sludge is pretreated before being subjected to a membrane bioreactor and a fraction of sludge in the bioreactor is circulated through pretreatment devices. According to the present invention, since the biodegradability of cells in the sludge increases greatly by chemical and/or physical pretreatment, and since the solid-liquid separation and biodegradation occurs simultaneously in the membrane bioreactor, it is possible to significantly enhance sludge reduction efficiency.

## Description

### TECHNICAL FIELD

The present invention relates to sludge treatment using sludge pretreatment device and membrane bioreactor. The present invention greatly improves the efficiency of sludge treatment produced during sewage/wastewater treatment by employing chemical and/or physical sludge pretreatment and membrane-separation.

### BACKGROUND

Activated sludge process and its applications, which employ microorganisms for decomposing organic compounds, have been used for treating wastewater and/or sewage sludge. These conventional processes, however, result in the increase of the concentration of the microorganisms, which should be also digested and removed. Therefore, these processes need further procedures for withdrawing some parts of the resulting sludge for the safe operation and the effective solid/liquid separation of the treatment system, wherein the withdrawn sludge are further treated by chemical, physical and/or biological processes for volume and mass reduction. Consequently, the resulting sludge cakes are landfilled, incinerated, and/or thrown into the sea.

Anaerobic digestion process and aerobic digestion process are well-known methods for reducing sludge volume. In these two methods, bioreactors are operated without being furnished of organic substrates, and the microorganisms, and intrinsic biodegradatin or endogenous digestion of the sludge is induced.

More specifically, in anaerobic digestion process, biodegradation of sludge is induced without O₂ supply under the controls of temperature and pH, etc. In general, biodegradation of sludge occurs slowly in anaerobic digestion. It takes about 30 days to reduce 20-30% of the sludge (Sludge into Biosolids' L. Spinosa and P.A. Vesilind, IWA Publishing, 2001).

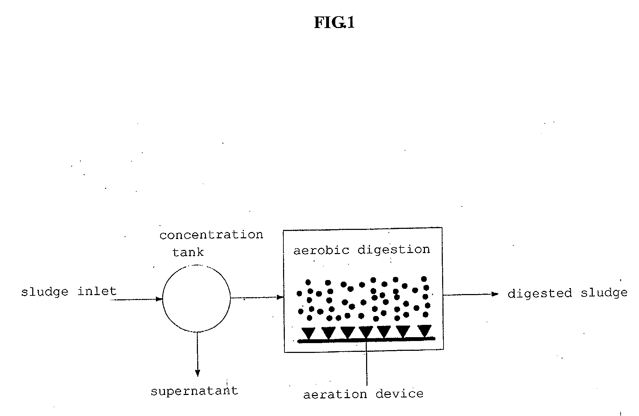

On the other hand, in aerobic digestion process, biodegradation of sludge is induced with continuous aeration of the sludge (see FIG.1). Thus, the aerobic digestion process has an advantage of reducing the total retention time for decomposing organic compounds in the sludge to 15-20 days in comparison to the anaerobic digestion process. It requires, however, additional costs for the aeration.

Thus, the conventional processes for reducing sludge quantity have disadvantages as follows: *i)* relatively long retention time and low reduction efficiency (about 20-40 %), and *ii*) high treatment costs. And, the lower biodegradability of the microorganisms, such as bacteria and fungi, etc., is thought to be the substantial reason for these disadvantages [Müller J. Disintegration as a key-step in sewage sludge treatment. *Wat. Sci. Technol.* **41**(8), 123-130(2000)].

The biological decomposition of sludge is typically accomplished through 2 (two) steps of i) solublilization of the microorganisms in the sludge by hydrolysis and ii) decomposition of the solubilized organic compounds or waste. The first step of hydrolysis of the microorganisms is considered to be the rate-limiting step in biological sludge decomposition, since the cell membranes and/or cell walls prevent the cell components from hydrolysis.

Accordingly, there have been strong needs to increase the biodegradability of the microorganisms in the sludge for improving treatment efficiency.

### DETAILED DESCRIPTIONS OF THE INVENTION

Any publications referenced herein are hereby incorporated by reference in this application in order to more fully describe the state of the art to which the present invention pertains.

It is important to understand the present invention to note that all technical and scientific terms used herein, unless otherwise defined, are intended to have the same meaning as commonly understood by one of ordinary skill in the art. The techniques used herein are also those that are known to one of ordinary skill in the art, unless stated otherwise.

Reference to particular device, cells, treatment conditions and the like, or to some subclass of same, is not intended to be limiting, but should be read to include all such related materials that one of ordinary skill in the art would recognize as being of interest or value in the particular context in which that discussion is presented.

It is an object of the present invention to provide more efficient and cost effective method and system for organic sludge treatment.

In order to accomplish the object of the present invention, the present invention employs sludge pretreatment processes to increase biodegradability of microorganisms and other biomass particles in the sludge.

Specifically, in order to increase the biodegradability of microorganisms, the sludge is firstly subjected to chemical and/or physical pretreatment such as ozone treatment and thermal or alkaline treatment where cell walls of microorganisms are disrupted and the hydrolysis of the cell components is enhanced and accelerated. Afterward, the pretreated sludge is transferred to a bioreactor equipped with submerged membrane either hollow fiber or flat type membrane. In the bioreactor, rapid biodegradation of the pretreated sludge occurs while soild-liquid separation is accomplished by membrane filtration.

Furthermore, the bioreactor of the present invention can include conventional aeration device and anoxic tank for nitrification and/or denitrification of nitrogen components (NO₂ and NO₃, etc.) generated from the aeration device.

### BRIEF DESCRIPTIONS OF FIGURES

FIG.1 is a schematic diagram of the conventional aerobic sludge digestion process.

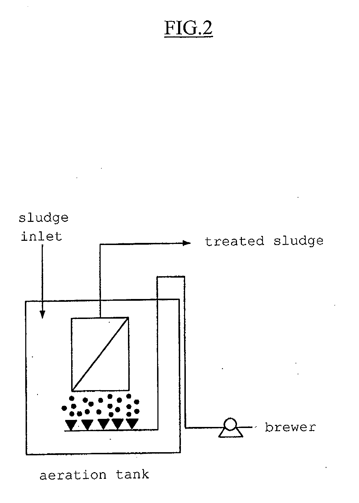

FIG.2 is a schematic diagram of the wastewater treatment process in membrane bioreactor process.
FIG.3 is a schematic diagram of the sludge treatment process of the present invention.
FIG.4 shows the mixed liquor suspended solid concentrations in the bioreactor with and without the pretreatment which is alkaline treatment followed by ozone treatment

Preferred embodiments of this invention are described in the following examples. Other embodiments within the scope of the claims herein will be apparent to those skilled in the art from consideration of the specification or practice of the invention as disclosed herein. It is intended that the specification, together with the examples, be considered exemplary only, with the scope and the spirit of the invention being indicated by the claims that follow the examples. The examples herein are meant to exemplify the various aspects of carrying out the invention and not intended to limit the scope of the invention in any way. The examples do not include detailed descriptions of conventional methods, such as aerobic sludge digestion and membrane separation, etc. Such methods are well known to those skilled in the art and are described in numerous publications. In addition, all the publications referred herein are integrated hereto as references.

### EXAMPLES

Hereinafter, the operation of the devices and the features thereof will be illustrated.

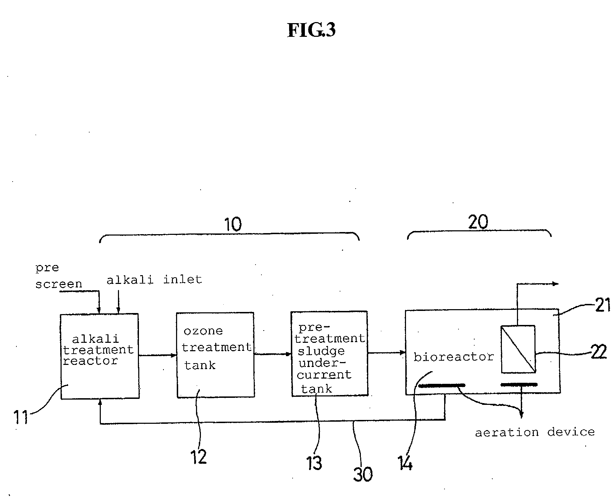

Referring to the FIG.3, it shows schematic diagram representing the sludge treatment process of the present invention, wherein the process comprises pretreatment device (10) and membrane reactor for sludge decomposition (20). It is disclosed more specifically as below.

### Sludge pretreatment device (10) and the process using the same

Most parts of the sludge produced in biological wastewater treatment process consist of microorganism cluster. To enhance the solubility and biodegradability of sludge, they are subjected to biological and/or physical treatments before being applied to sludge reduction processes. When the cell walls of the microorganisms are disrupted, the organic constituents of the cell are released and high molecular materials are converted into low molecular materials through hydrolysis. Thereby, the biodegradability of the sludge is enhanced and accelerated. Ozone (O₃) treatment, thermal treatment, chemical treatment can be employed independently or in combination as a pretreatment process to disintegrate cell walls.

Referring to FIG.3, the pretreatment device is comprised of: alkaline treatment tank (11) to which alkali agents, such as NaOH and Ca(OH)₂ were furnished; ozone treatment tank (12) for O₃ treatment; and pretreated sludge equalization tank (13). As indicated in the table 1, the initial concentrations of suspended solids and COD (Cr) (chemical oxygen demand) of the raw sludge were respectively 11,440 mg/l and 13,890 mg/l. The level of biodegradability of pretreated sludge was determined by respirometric method. With the results, it was confirmed that the levels of soluble organic fraction and biodegradability of sludge were significantly increased by various pretreatments. Among the pretreatments, alkaline treatment in combination with ozone treatment showed the best performances.

**Table 1.**

| The effects of various pretreatments of sludge with regard to the solubilization effects and the biodegradability. | | | | | |
|---|---|---|---|---|---|
| Pretreatme nt process | The concentration of the initial floating matters (mg/l) | Solubilization efficiency (%) | Biodegradability (%) | | note |
| | | | Time-period for biodegradatio n (5 days) | Time-period for biodegradation (10 days) | |
| No | 11,440 | 3 | 12 | 25 | |
| Alkaline treatment | | 23 | 31 | 43 | pH 12, for 3 hrs. |
| Thermal treatment | | 17 | 16 | 32 | 60°C, for 3 hrs. |
| Ozone treatment | | 28 | 34 | 51 | 0.05 g O₃/g-SS |
| Alkaline + thermal treatment | | 32 | 31 | 58 | pH 12, 60°C for 3 hrs. |
| Ozone + alkaline treatment | | 39 | 38 | 69 | pH 12, 0.05 gO₃/g-SS |
| * COD (Cr): 13,890 mg/l. | | | | | |
| * SS: suspended solids | | | | | |

### Membrane reactor for sludge decomposition (20) and the process using the same

The membrane reactor for sludge decomposition (20) comprises a bioreactor (21), in which organic compounds are decomposed, and a submerged membrane module for solid-liquid separation (22). In the process of membrane filtration, suction pressure was applied to separate the solid materials. As a result, the decomposition efficiency of solid sludge in the bioreactor increased greatly. That was caused: i) since the rate of biological decomposition or endogenous respiration was more or less proportional to the sludge concentration, the high concentration of sludge in bioreactor (21) resulted in the increase of endogenous respiration rate, and ii) a good portion of sludge was converted to biodegradable matters via pretreatment.

Although the membrane separation system makes it possible to maintain relatively high concentrations of sludge in the bioreactor, the concentration should be controlled below a certain level. Very high sludge concentrations in the bioreactor often cause major problems such as membrane fouling and significant drop of oxygen transfer rate. Accumulation of nondegradable inorganic compounds within the reactor is also a problem, reducing the organic fraction of the mixed liquor in the reactor. Accordingly, in order to avoid the accumulation of the inorganic compounds, a fraction of the sludge (about 20% of the influent raw sludge) was continuously withdrawn and was removed from the bioreactor (21). That is, a fraction of the sludge was recycled to alkaline treatment tank (11), while another fraction of the sludge were withdrawn and removed from the treatment system.

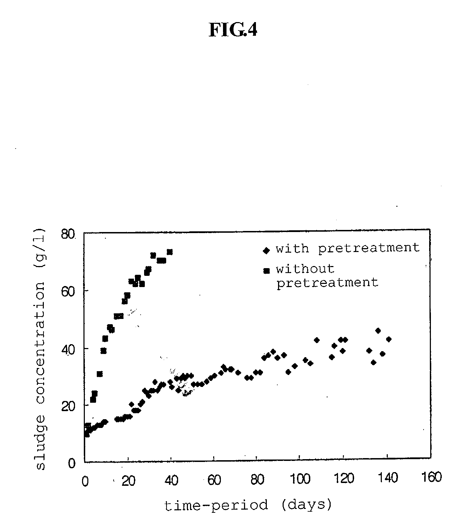

Referring to FIG.4, the role of the pretreatment (alkaline treatment to pH 12 followed by ozone treatment at the dose of 0.02 gO₃/gSS) in the aerobic digestion coupled with membrane separation was demonstrated.

In this comparison study, both of the processes were operated under the same condition except that one was without the pretreatment. The hydraulic retention time was 5 days. As for the process without the sludge pretreatment, the decomposition rate of sludge was so low that the sludge in the bioreactor accumulated rapidly. Therefore, it was required either to increase the retention time or to withdraw more sludge in order to maintain the concentration of sludge in the bioreactor (21) at appropriate level.

Whereas, as for the treatment process including the pretreatment, the present invention, the decomposition rate of sludge was relatively higher and the sludge level in the bioreactor increased very slowly. Thus, it was possible to keep the sludge concentration in the bioreactor (21) within the desired level, while withdrawing relatively small amounts of sludge.

On the other hand, when the concentration of the sludge in the bioreactor increased, the pore blocking of the membrane immersed in the membrane module (22) had occurred. Aeration pipes were disposed at the bottom area of the membrane module so that the liquid stream generated by the air bubbles prevented membrane fouling.

### INDUSTRIAL APPLICABILITIES

As disclosed above, the present invention relates to a method and a device for treating excess sludge and/or primary sludge produced from biological wastewater treatment plants. According to the present invention, it is possible not only to shorten the time-period for sludge digestion but also to enhance the solid reduction efficiency. Thus, the present invention provides a cost effective tools for resolving a problem of environment pollution.

While this invention has been particularly shown and described with reference to particular embodiments thereof, it will be understood by those skilled in the art that various changes in form and details may be effected therein without departing from the spirit and scope of the invention as defined by the appended claims.

## Claims

1. A sludge treating method comprising the steps of:
i) pretreating sludge in order to increase soluble fraction and biodegradability of the bacteria cells in the sludge;
ii) transferring the pretreated sludge to a aerated bioreactor for biological decomposition; and
iii) conducting solid-liquid separation by membrane modules (22) submerged in the bioreactor (21).

2. The sludge treating method as claimed in claim 1, wherein the method is **characterized by** comprising further steps of;
a) withdrawing and removing a fraction of sludge in the bioreactor (21); and
b) sending back a fraction of the sludge to the pretreatment reactors via return pipe (30).

3. The sludge treating method as claimed in claim 1 or 2, wherein the pretreatment is chemical and/or physical treatments.

4. The sludge treating method as claimed in claim 3, wherein the pretreatment is ozone treatment, thermal treatment, alkaline treatment, and/or their combinations.

5. The sludge treating method as claimed in claim 1 or 2, wherein the method is **characterized by** comprising further steps of delivering off-gas, which is generated from the ozone treatment reactor (12), to the bioreactor for aeration purpose (20).

6. A sludge treatment device which comprises:
i) a pretreatment device having ozone treatment reactor, thermal treatment reactor and/or alkali agent treatment reactor; and
ii) a bioreactor (21) equipped with submerged membrane module (22) either hollow fiber or flat membrane.
